# EUROPÄISCHE PATENTSCHRIFT

(11) **EP 3 465 897 B1**
(45) Veröffentlichungstag und Bekanntmachung des Hinweises auf die Patenterteilung: **17.07.2019**
(21) Anmeldenummer: 17764558.7
(22) Anmeldetag: 06.09.2017
(51) Int. Cl.: H02M 7/5387, H02M 1/12, H02J 3/38

(54) **HYBRIDES TAKTVERFAHREN FÜR TRANSFORMATORLOSEN EINPHASEN NETZWECHSELRICHTER**
HYBRID MODULATION METHOD FOR TRANSFORMERLESS SINGLE-PHASE GRID INVERTER
PROCÉDÉ DE MODULATION HYBRID POUR UN ONDULEUR DE RESÉAU MONO-PHASÉ

(30) Priorität: 06.09.2016 DE 102016116630
(43) Veröffentlichungstag der Anmeldung: 10.04.2019
(73) Patentinhaber: SMA Solar Technology AG, 34266 Niestetal (DE)
(72) Erfinder: MUELLER, Burkard, 34123 Kassel (DE); RIGBERS, Klaus, 34121 Kassel (DE); VOGT, Wilfried, 34125 Kassel (DE)
(86) Internationale Anmeldenummer: PCT/EP2017/072394
(87) Internationale Veröffentlichungsnummer: WO 2018/046565

(56) Entgegenhaltungen:
- EP-A1- 3 021 447
- EP-A2- 2 546 973
- CN-A- 104 300 811
- EUGENIO GUBIÁ ET AL: "EMI filter inductor size for transformerless PV systems based on the full bridge structure", POWER ELECTRONICS AND MOTION CONTROL CONFERENCE (EPE/PEMC), 2010 14TH INTERNATIONAL, IEEE, PISCATAWAY, NJ, USA, 6. September 2010 (2010-09-06), Seiten S9-1, XP031778300, ISBN: 978-1-4244-7856-9
- TANG YI ET AL: "Highly Reliable Transformerless Photovoltaic Inverters With Leakage Current and Pulsating Power Elimination", IEEE TRANSACTIONS ON INDUSTRIAL ELECTRONICS, IEEE SERVICE CENTER, PISCATAWAY, NJ, USA, Bd. 63, Nr. 2, 1. Februar 2016 (2016-02-01), Seiten 1016-1026, XP011591266, ISSN: 0278-0046, DOI: 10.1109/TIE.2015.2477802 [gefunden am 2016-01-08]
- WU TSAI-FU ET AL: "Combined Unipolar and Bipolar PWM for Current Distortion Improvement During Power Compensation", IEEE TRANSACTIONS ON POWER ELECTRONICS, INSTITUTE OF ELECTRICAL AND ELECTRONICS ENGINEERS, USA, Bd. 29, Nr. 4, 1. April 2014 (2014-04-01), Seiten 1702-1709, XP011529938, ISSN: 0885-8993, DOI: 10.1109/TPEL.2013.2265399 [gefunden am 2013-10-15]

## Beschreibung

Die Erfindung betrifft ein Verfahren zum Betrieb eines Wechselrichters, sowie einen Wechselrichter.

Wechselrichter werden in photovoltaischen (PV-)Anlagen zur Umwandlung von als Gleichstrom von Solarmodulen bereitgestellter Leistung in Wechselstrom eingesetzt, um diese in ein Netz einspeisen zu können. Typischerweise wird die von einer Vielzahl von Solarmodulen gemeinsam erzeugte Leistung durch einen Wechselrichter in Wechselspannung umgewandelt, wobei transformatorlose Wechselrichter eine besonders effiziente Umwandlung erlauben. Insbesondere einphasig einspeisende transformatorlose Wechselrichter mit Vollbrückentopologie erlauben während des Betriebs der Regel keine Erdung der Solarmodule, weil sich der Potentialbezug gegenüber Erdpotential mit der Netzfrequenz ändert. Diese netzfrequente Potentialänderung führt in Verbindung mit konstruktionsbedingten Ableitkapazitäten an den Solarmodulen zu Ableitströmen, deren Amplitude zum Beispiel bei Regen erhöhte Werte annehmen kann. PV-Anlagen weisen aus Gründen der Betriebssicherheit Differenzstromsensoren auf. Da sich der Ableitstrom mit dem Fehlerstrom der Anlage überlagert und zu einem durch die Differenzstromsensoren gemessenen Fehlerstromwert beiträgt, kann ein erhöhter Ableitstrom zu einer frühzeitigen Auslösung von auf Fehlerstrommessungen beruhenden Schutzmechanismen führen, wodurch sich die PV-Anlage selbstständig abschaltet, obwohl ein sicherer Betrieb weiterhin möglich wäre.

In der Schrift *"*EMI filter inductor size for transformerless PV systems based on the full bridge structure" von E. Gubia et al., Power Electronics and Motion Control Conference (EPE/PEMC), 2010 14th International, IEEE, wird der Einfluss der Modulationsart von Brückenwandlern auf Gleichtaktströme analysiert und zur Verbesserung der Effizienz und Netzfilterauslegung genutzt. Das Dokument offenbart auch eine transformatorlose Ausführung der Anordnung. Um einen Kompromiss zwischen uni- und bipolarer Taktung zu finden werden hybride Modulationsverfahren vorgeschlagen. In einer Form wird ein Umrichterarm mit Netzfrequenz und einer mit einer hohen Schaltfrequenz betrieben. Es ist daher Aufgabe der vorliegenden Erfindung, ein Betriebsverfahren für einen transformatorlosen Vollbrückenwechselrichter aufzuzeigen, das einer Erhöhung des Ableitstromes entgegenwirkt. Entsprechend soll ein Wechselrichter aufgezeigt werden, der bei der Bestimmung von Fehlerströmen unempfindlicher gegenüber dem Einfluss einer hohen Ableitkapazität ist.

Diese Aufgabe wird durch das Verfahren des unabhängigen Anspruchs 1 gelöst. Die auf diesen Anspruch zurückbezogenen abhängigen Verfahrensansprüche zeigen bevorzugte Ausführungsformen der Erfindung auf. Weiterhin wird die Aufgabe durch einen Wechselrichter des nebengeordneten Vorrichtungsanspruchs 10 gelöst, wobei die auf diesen Anspruch zurückbezogenen abhängigen Vorrichtungsansprüche weitere Ausführungsformen der Erfindung darstellen.

Ein Aspekt der Erfindung betrifft ein Verfahren zum Betrieb eines transformatorlosen Vollbrücken-Wechselrichters mit einer ersten Halbbrücke und einer zweiten Halbbrücke, die parallel zueinander und zu einem Zwischenkreis zwischen DC-Anschlüssen des Wechselrichters angeordnet sind und deren Brückenausgang jeweils über eine Filterdrossel mit einem der entsprechenden Halbbrücke zugeordneten AC-Ausgang des Wechselrichters verbunden ist, wobei die AC-Ausgänge mit einem Netz verbunden sind, und wobei zwischen den AC-Ausgängen ein niederimpedant mit dem Zwischenkreis gekoppeltes Netzwerk von Filterkondensatoren angeordnet ist. Das Verfahren umfasst die Schritte Betreiben der beiden Halbbrücken des Wechselrichters mit einem unipolaren ersten Taktverfahren und Bestimmen eines Wertes eines netzfrequenten Ableitstroms an den DC-Anschlüssen des Wechselrichters. Das Verfahren ist dadurch gekennzeichnet, dass bei Überschreiten eines Grenzwertes durch den Ableitstromwert die beiden Halbbrücken des Wechselrichters mit einem ableitstromreduzierenden zweiten Taktverfahren betrieben werden, in dem die erste Halbbrücke eine Wechselspannung an dem ihr zugeordneten AC-Ausgang bereitstellt, wobei eine Amplitude der Wechselspannung weniger als 50% der Amplitude einer Spannungsamplitude des Netzes beträgt und die zweite Halbbrücke eine Differenzspannung zwischen der Netzspannung und der von der ersten Halbbrücke bereitgestellten Spannung an dem ihr zugeordneten AC-Ausgang bereitstellt. Das unipolare Taktverfahren zeichnet sich dadurch aus, dass der Wechselrichter während eines Zeitraums, dessen Dauer der Dauer einer Netzhalbwelle entspricht, so betrieben wird, dass nur eine der Halbbrücken getaktet wird.

Bevorzugt sind die von den Halbbrücken bereitgestellten Wechselspannungen jeweils Sinusspannungen, es sind jedoch auch beliebige andere Spannungsverläufe denkbar, bei denen die Kombination der von der ersten Halbbrücke und der zweiten Halbbrücke bereitgestellten Spannungsverläufe dem Spannungsverlauf der Netzspannung entspricht.

Vorteilhafterweise wird die Amplitude der von der ersten Halbbrücke bereitgestellten Wechselspannung in Abhängigkeit des Ableitstromwertes gewählt. Bevorzugt wird die Amplitude der von der ersten Halbbrücke bereitgestellten Wechselspannung umso geringer gewählt, je höher der Ableitstromwert ist. Hierdurch ergibt sich eine entsprechende Verringerung der Amplitude der Potenzialschwankung an den Anschlüssen eines mit dem Wechselrichter verbundenen Generators, so dass einer Erhöhung des Ableitstromwertes entgegengewirkt wird oder diese Erhöhung sogar gänzlich vermieden wird. In einer speziellen Ausführungsform wird die Amplitude so geregelt, dass ein Maximalwert des Ableitstroms nicht überschritten wird.

Es ist von Vorteil, den der ersten Halbbrücke zugeordneten AC-Ausgang mit einem Neutralleiter des Netzes und den der zweiten Halbbrücke zugeordneten AC-Ausgang mit dem Phasenleiter zu verbinden. Dies kann zum Beispiel dadurch sichergestellt werden, dass eine Installationsvorschrift lautet, dass einer der AC-Anschlüsse mit dem Neutralleiter zu verbinden ist. Alternativ kann die Zuordnung einmalig oder regelmäßig geprüft werden, indem der Wechselrichter die Spannungen an den AC-Ausgängen gegenüber Erde misst und aufgrund dieser Messung bestimmt, welcher der beiden AC-Ausgänge mit dem Neutralleiter des Netzes verbunden ist. Die Zuordnung der im Wechselrichter vorhandenen Halbbrücken als erste Halbbrücke und zweite Halbbrücke kann dann entsprechend gewählt oder auf eine falsche Verbindung hingewiesen werden. Alternativ ist es aber auch denkbar, dass der Wechselrichter bestimmt, ob durch den Wechsel vom ersten Taktverfahren zum zweiten Taktverfahren ein Anstieg oder ein Abfall des Ableitstromwertes erreicht wird und in dem Fall, dass der Ableitstromwert ansteigt, die Zuordnung der Halbbrücken des Wechselrichters als erste Halbbrücke und zweite Halbbrücke austauscht.

Ergänzend zum Wechsel des Taktverfahrens kann der Wechselrichter bei Überschreiten des Grenzwertes durch den Ableitstromwert weiterhin eine an den DC-Anschlüssen anliegende Gleichspannung durch Ansteuern eines eingangsseitigen DC/DC-Wandlers erhöhen. Der DC/DC-Wandler kann hierbei als Hochsetzsteller oder als Tiefsetzsteller wirken und insbesondere die angeschlossenen Solarmodule trotz geänderter Gleichspannung an den DC-Anschlüssen im MPP (Maximum Power Point) halten. Durch die erhöhte Gleichspannung an den DC-Anschlüssen kann mit der zweiten Halbbrücke eine höhere Teilspannung gestellt werden, sodass die erste Halbbrücke nur einen kleineren Anteil der Netzspannung stellen muss und damit weniger Ableitstrom hervorgerufen wird.

In einer bevorzugten Ausführungsform des erfindungsgemäßen Verfahrens wird bei Überschreiten des Grenzwertes durch den Ableitstromwert eine der Halbbrücken gesteuert betrieben und die andere der Halbbrücken geregelt betrieben. Bevorzugt wird hierbei die erste Halbbrücke gesteuert betrieben. Ein gesteuerter Betrieb kann beispielsweise dadurch realisiert werden, dass ein vorgegebenes Taktmuster beziehungsweise ein vorgegebener Verlauf des Tastgrades zur Ansteuerung der Halbbrücke verwendet wird, ohne dass eine an dem Brückenausgang anliegende Spannung oder ein dort fließender Strom berücksichtigt wird. In diesem Fall stellt die geregelt betriebene Halbbrücke den gewünschten Netzstrom ein.

In einer vorteilhaften Ausführung des Verfahrens werden die erste Halbbrücke und die zweite Halbbrücke synchron zueinander betrieben, also mit gleicher Taktfrequenz beziehungsweise mit festem Zeitbezug zwischen Schaltzeitpunkte der ersten und der zweiten. Dabei können als Schaltzeitpunkte z.B. die Einschaltzeitpunkte oder die Ausschaltzeitpunkte oder der Mittelpunkt der Einschaltdauer zweier Schalter der beiden Halbbrücken gewählt werden. Es ist aber ebenfalls denkbar, die zwei Halbbrücken unabhängig voneinander und sogar mit unterschiedlichen Taktfrequenzen zu betreiben.

Da ein Betrieb des Wechselrichters im zweiten Taktverfahren zu einer höheren thermischen Belastung der Schaltelemente und der Drosseln führt, ist es von Vorteil, eine maximale Wechselrichterleistung während des Betriebs mit dem zweiten Taktverfahren auf einen geringeren Wert zu begrenzen als mit dem ersten Taktverfahren. Eine stärkere Begrenzung der maximalen Wechselrichterleistung im zweiten Taktverfahren verhindert somit eine Überlastung des Wechselrichters.

Unter Berücksichtigung der höheren Wandlerverluste des Wechselrichters im zweiten Taktverfahren ist es von Vorteil, bei Überschreiten des Grenzwertes durch den Ableitstromwert eine Amplitude für die von der ersten Halbbrücke bereitgestellten Wechselspannung zu wählen, die höchstens 30 % der Amplitude der Netzspannung beträgt, um eine Reduzierung des Ableitstromwertes zu erreichen, die die höheren Wandlerverluste des Wechselrichters im zweiten Taktverfahren ausgleichen. Insbesondere ist es von Vorteil, die Amplitude der von der ersten Halbbrücke bereitgestellten Wechselspannung stufenweise zu verändern. Hierbei ist es von Vorteil, mindestens zwei Stufen im zweiten Taktverfahren vorzusehen. Alternativ ist ebenfalls denkbar, eine Amplitude für die von der zweiten Halbbrücke bereitgestellten Wechselspannung bei Überschreiten des Grenzwerts vorzugeben, insbesondere diese so groß zu wählen, wie es die anliegende Gleichspannung an den DC-Anschlüssen zulässt, beispielsweise die Hälfte dieser Gleichspannung oder einen hierzu geringfügig reduzierten Wert zu wählen. Bei sich ändernder Gleichspannung an den DC-Anschlüssen kann auch die Amplitude der von der zweiten Halbbrücke bereitgestellten Wechselspannung fortlaufend angepasst werden. Die Amplitude der von der ersten Halbbrücke bereitgestellten Wechselspannung wird entsprechend angepasst, um in Summe die Amplitude der Netzspannung bereitzustellen.

Um den Zeitraum, in dem der Wechselrichter zur Begrenzung des Ableitstrom mit dem weniger effizienten zweiten Taktverfahren betrieben werden muss, möglichst kurz zu halten, bestimmt der Wechselrichter fortlaufend oder wiederholt während des Betriebes mit dem zweiten Taktverfahren den aktuellen Ableitstromwertes und vergleicht ihn mit einem weiteren Grenzwert, der bevorzugt in Abhängigkeit des aktuell verwendeten Amplitudenwertes der von der ersten Halbbrücke bereitgestellten Wechselspannung bestimmt ist. Unterschreitet der aktuelle Ableitstromwert diesen weiteren Grenzwert, ist dies ein Zeichen, dass in das erste Taktverfahren zurück gewechselt werden kann, ohne erneut den Grenzwert zu überschreiten. Der Wechselrichter wechselt dann entweder sofort oder nach Ablauf einer vorgegebenen Zeit, in der der Ableitstromwert den weiteren Grenzwert nicht wieder überschreitet, zurück zum ersten Taktverfahren. Insbesondere wenn die von den jeweiligen Halbbrücken bereitgestellte Amplitude der Wechselspannung in Abhängigkeit von der an den DC-Anschlüssen anliegenden Gleichspannung gewählt ist, kann der weitere Grenzwert als Funktion dieser Gleichspannung bestimmt sein.

In dem Fall, dass das zweite Taktverfahren auf einen festen Ableitstromwert regelt, würde auf das erste Taktverfahren zurückgekehrt, wenn die Amplitude der von der ersten Halbbrücke bereitgestellten Wechselspannung einen Amplituden-Grenzwert überschreitet.

Ein weiterer Aspekt der Erfindung betrifft einen transformatorlosen Wechselrichter, der zum Betrieb mit dem vorstehend beschriebenen Verfahren beziehungsweise seinen Ausführungsformen eingerichtet ist. Hierbei kann das Netzwerk von Filterkondensatoren zwischen den AC-Anschlüssen eine Serienschaltung von zwei Filterkondensatoren umfassen, deren Mittelpunkt mit einem der DC-Anschlüsse oder mit einem Mittelpunkt eines als geteilter Zwischenkreis gestalteten Zwischenkreises verbunden ist. Weiterhin sind die Filterdrosseln des erfindungsgemäßen Wechselrichters nicht magnetisch miteinander gekoppelt.

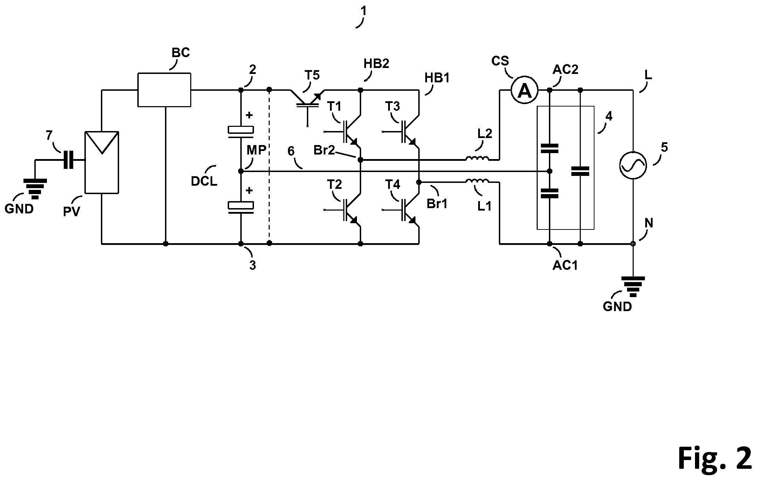

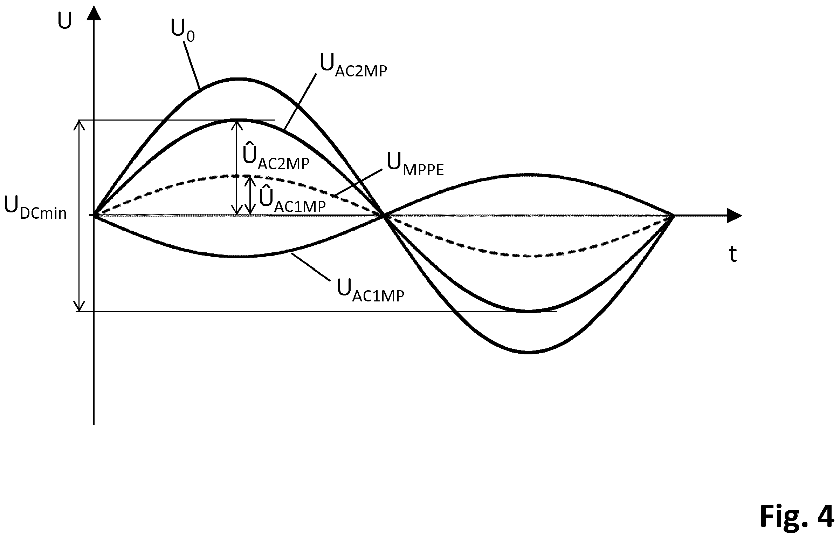

Die beiden Halbbrücken bilden gemeinsam, gegebenenfalls mit zusätzlichen Komponenten der Wechselrichterbrücke, insbesondere zusätzlichen Schaltern, eine H4-, eine H5-, eine H6-, eine H6Q- oder eine HERIC-Topologie. Eine Übersicht über die genannten Topologien findet sich beispielsweise im Artikel *"From H4, H5 to H6* - *Standardization of Full-Bridge Single Phase Photovoltaic Inverter Topologies without Ground Leakage Current Issue"* von Jianhua Wang et al., erschienen in 2012 IEEE Energy Conversion Congress and Exposition (ECCE), beziehungsweise zur H6Q-Topologie in der Schrift EP 2 237 404 A1. Dabei werden die zusätzlichen Schalter der Wechselrichterbrücke während des Betriebs mit dem zweiten, ableitstromreduzieren Taktverfahren innerhalb einer Halbwelle dauerhaft in einem Schaltzustand gehalten, so dass die Schalter der beiden Halbbrücken durch hochfrequentes Takten den gewünschten aktuellen Spannungswert bereitstellen können. So wird in der Nomenklatur des Artikels von Wang der zusätzliche Schalter S5 in der H5-Topologie dauerhaft geschlossen (siehe Fig. 2a im Artikel von Wang), die Schalter S5 und S6 in der HERIC-Topologie dauerhaft geöffnet (siehe Fig. 2e), beziehungsweise in der H6-Topologie die vom Brückenausgang gesehen den DC-Anschlüssen zugewandten Schalter der Halbbrückenhälften mit zwei in Reihen geschalteten Schalter dauerhaft geschlossen (S1 und S3 in Fig. 2f, S3 und S4 in Fig. 2g, S3 in Fig. 4b, S4 in Fig. 4c und Fig. 4d, S1 in Fig. 4e).

Der erfindungsgemäße Wechselrichter kann in einer Ausführungsform nur einen Stromsensor zur Bestimmung des AC-Ausgangsstroms aufweisen, der insbesondere an dem der zweiten Halbbrücke zugeordneten AC-Ausgang angeordnet ist. Sofern während des Betriebes mit dem zweiten Taktverfahren eine der Halbbrücken gesteuert und eine der Halbbrücken geregelt betrieben wird, ist der Stromsensor bevorzugt am AC-Ausgang, der der geregelt betriebenen Halbbrücke zugeordnet ist, angeordnet.

Neben der Wechselrichterbrücke mit der ersten und der zweiten Halbbrücke kann ein erfindungsgemäßer Wechselrichter weiterhin einen DC/DC-Wandler, insbesondere einen Hochsetzsteller, aufweisen, dessen Ausgang mit den DC-Anschlüssen verbunden ist. In dieser Ausführung kann der DC/DC-Wandler dazu genutzt werden, während des Betriebes mit dem zweiten Taktverfahren eine höhere Gleichspannung an den DC-Anschlüssen bereitzustellen als während des Betriebes mit dem ersten Taktverfahren.

In einem weiteren Aspekt betrifft das anmeldungsgemäße Betriebsverfahren einen transformatorlosen Wechselrichter, bei dem die Wechselrichterbrücke in H4-Topologie mit einer ersten Halbbrücke und einer zweiten Halbbrücke, die parallel zueinander und zu einem Zwischenkreis zwischen DC-Anschlüssen des Wechselrichters angeordnet sind, ausgeführt ist. Der Brückenausgang beider Halbbrücken ist jeweils über eine Filterdrossel mit einem der entsprechenden Halbbrücke zugeordneten AC-Ausgang des Wechselrichters verbunden ist, wobei die AC-Ausgänge mit einem Netz verbunden sind. Zwischen den AC-Ausgängen ist hierbei ein niederimpedant mit dem Zwischenkreis gekoppeltes Netzwerk von Filterkondensatoren angeordnet. Das Verfahren umfasst ein Betreiben der beiden Halbbrücken des Wechselrichters mit einem ersten Taktverfahren und ein Bestimmen eines Wertes eines netzfrequenten Ableitstroms an den DC-Anschlüssen des Wechselrichters und ist weiterhin dadurch gekennzeichnet, dass bei Überschreiten eines Grenzwertes durch den Ableitstromwert die beiden Halbbrücken des Wechselrichters mit einem ableitstromreduzierenden zweiten Taktverfahren betrieben werden. In dem ersten Taktverfahren werden die Halbbrücken gemeinsam mit einem bipolaren Taktmuster betrieben, wodurch an beiden AC-Ausgängen gegenläufige Spannungsverläufe mit einer Amplitude bereitgestellt werden, die jeweils 50% der Netzspannungsamplitude beträgt. In dem ableitstromreduzierenden Taktverfahren stellt die erste Halbbrücke eine Wechselspannung an dem ihr zugeordneten AC-Ausgang bereit, die weniger als 50% einer Spannungsamplitude des Netzes, bevorzugt weniger als 30% der Netzspannungsamplitude beträgt, und die zweite Halbbrücke an dem ihr zugeordneten AC-Ausgang eine Differenzspannung zwischen der Netzspannung und der von der ersten Halbbrücke bereitgestellten Spannung bereit. Hierdurch ergibt sich im ersten Taktverfahren eine Schwankung der Spannung der DC-Anschlüsse gegenüber Erdpotential von 50% der Netzspannungsamplitude und im zweiten Taktverfahren eine hierzu reduzierte Schwankung und dadurch ein reduzierter Wert des netzfrequenten Anteils des Ableitstroms. Die Amplitude der von der ersten Halbbrücke bereitgestellten Spannung wird bevorzugt in Abhängigkeit der Höhe des Ableitstromes gewählt, insbesondere so gewählt, dass der netzfrequente Anteil des Ableitstroms unterhalb eines vorgegebenen kritischen Wertes verbleibt. Bevorzugt wird diese Amplitude stufenweise verändert, wenn entsprechende Grenzwerte des netzfrequenten Anteils des Ableitstroms über- oder unterschritten werden. Die Amplitude wird hierbei bei Überschreiten entsprechender Grenzwerte erniedrigt und bei Unterschreiten erhöht.

Dieses alternative anmeldungsgemäße Betriebsverfahren kann insbesondere in Verbindung mit gegenüber Silizium-Schaltern schneller schaltenden Halbleiterschaltern, beispielsweise aus Gallium-Nitrid, eingesetzt werden, wodurch gegenüber dem ersten Taktverfahren die Schalt- und Magnetisierungsverluste während des zweiten Taktverfahrens nicht oder nicht wesentlich erhöht sind.

Im Folgenden werden die Erfindung und einige ihrer Ausführungsvarianten mithilfe von Figuren näher erläutert, wobei
- Fig. 1: einen schematischen Aufbau eines erfindungsgemäßen Wechselrichters in H4-Topologie,
- Fig. 2: eine weitere Ausführungsform eines erfindungsgemäßen Wechselrichters in H5-Topologie,
- Fig. 3: einen Zeitverlauf von Spannungen beim Betrieb des erfindungsgemäßen Wechselrichters in einem unipolaren ersten Taktverfahren, und
- Fig. 4: einen Zeitverlauf von Spannungen beim Betrieb des erfindungsgemäßen Wechselrichters in einem ableitstromreduzierenden zweiten Taktverfahren zeigt.

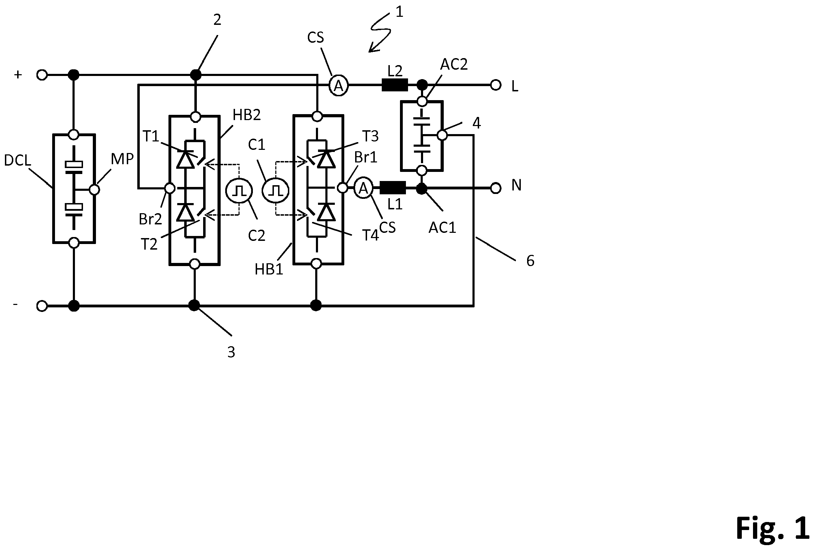

Der in Fig. 1 gezeigte Wechselrichter 1 weist DC-Anschlüsse 2, 3 auf, an denen eine nicht gezeigte Spannungsquelle, insbesondere ein PV-Generator, angeschlossen sein kann. Zwischen den DC-Anschlüssen 2, 3 ist ein Zwischenkreis DCL angeordnet, sowie parallel zum Zwischenkreis DCL eine erste Halbbrücke HB1 und eine zweite Halbbrücke HB2. Die erste Halbbrücke HB1 kann aus zwei in Reihe geschalteten Halbleiterschaltern T3, T4 gebildet sein. Der Mittelpunkt der Halbleiterschalter ist als erster Brückenausgang Br1 aus der ersten Halbbrücke HB1 herausgeführt. Analog kann die zweite Halbbrücke HB2 aus zwei in Reihe geschalteten Halbleiterschaltern T1, T2 gebildet sein, deren Mittelpunkt als zweiter Brückenausgang Br2 aus der zweiten Halbbrücke HB2 herausgeführt ist. Die Halbleiterschalter können eine intrinsische oder eine separate antiparallele Freilaufdiode aufweisen.

Eine erste Filterdrossel L1 verbindet den ersten Brückenausgang Br1 mit einem ersten AC-Ausgang AC1, eine zweite Filterdrossel L2 verbindet den zweiten Brückenausgang Br2 mit einem zweiten AC-Ausgang AC2. Zwischen den beiden AC-Ausgängen AC1, AC2 ist ein Netzwerk 4 von Filterkondensatoren angeordnet, die gemeinsam mit den Filterdrosseln L1, L2 einen AC-Netzfilter bilden. Das Netzwerk 4 wird hier durch eine Reihenschaltung von zwei Filterkondensatoren gebildet, deren Mittelpunkt über eine niederimpedante Verbindung 6 an den DC-Anschluss 3 angeschlossen ist. Die niederimpedante Verbindung 6 ist hier eine direkte Verbindung, wobei ebenfalls denkbar ist, in der Verbindung weitere, bei der Netzfrequenz und bei der Schaltfrequenz der Brücken eine geringe Impedanz aufweisende Bauteile vorzusehen. Alternativ zum DC-Anschluss 3 kann der Mittelpunkt des Netzwerks 4 ebenso an den DC Anschluss 2 oder den Mittelpunkt MP eines in diesem Fall geteilten Zwischenkreises DCL angeschlossen sein, so dass die jeweiligen Potentiale miteinander gekoppelt sind. Der erste AC-Ausgang AC1 kann mit einem Neutralleiter N eines Netzes verbunden sein und der zweite AC-Ausgang AC2 ist mit einem Phasenleiter L dieses Netzes verbunden. Es ist denkbar, dass der Netzfilter weitere Filterkomponenten, insbesondere weitere Filterdrosseln zwischen dem Netzwerk 4 und dem verbundenen Netz, aufweist.

Beide Halbbrücken HB1, HB2 werden durch ihnen zugeordnete Controller C1, C2 angesteuert. Der Controller C1 schaltet die Schalter T3, T4 der ersten Halbbrücke HB1 über Pulweitenmodulation an, der Controller C2 die Schalter T1, T2 der zweiten Halbbrücke HB2. Der von den Halbbrücken bereitgestellte Strom wird von an den Brückenausgängen Br1, Br2 angeordneten Stromsensoren CS erfasst. In dieser Ausführung kann durch eine Bestimmung der Differenz zwischen den Messwerten beider Stromsensoren CS ein Wert des Ableitstroms bestimmt werden. Der netzfrequente Ableitstrom ist hierbei der Frequenzanteil der Differenz bei der Frequenz des angeschlossenen Netzes. Alternativ kann der netzfrequente Ableitstrom auch durch weitere Sensoren auf der AC-Seite oder der DC-Seite des Wechselrichters 1 in vorbekannter Weise bestimmt werden.

Eine weitere Ausführungsform eines erfindungsgemäßen Wechselrichters 1 zeigt die Fig. 2. An den DC-Anschlüssen 2, 3 ist hier ein PV-Generator PV über einen DC/DC-Wandler BC, beispielsweise ein Hochsetzsteller, angeschlossen. Auch in den anderen Wechselrichtertopologien kann eingangsseitig ein solcher DC/DC-Wandler BC vorgesehen sein, um die Spannung des PV-Generators PV auf die Spannung des Zwischenkreises DCL umzusetzen. Symbolisch ist weiterhin eine Ableitkapazität 7 als Ursache für einen Ableitstrom gezeigt, die den PV Generator PV mit Erde GND verbindet. Die Wechselrichterbrücke ist hier als sogenannte H5-Brücke ausgelegt, die neben den Transistoren T1 bis T4 der beiden Halbbrücken HB1, HB2 noch einen weiteren Transistor T5 aufweist, der den oberen Anschlusspunkt der Halbbrücken HB1, HB2 mit dem DC-Anschluss 2 verbindet. Der Zwischenkreis DCL ist hier ebenfalls als geteilter Zwischenkreis mit einem Mittelpunkt MP ausgeführt. Ausgangsseitig ist das Netzwerk 4 des AC-Filters neben einer Reihenschaltung zweier Filterkondensatoren zwischen den Anschlüssen L, N, an die das Netz 5 angeschlossen ist, noch mit einem weiteren Kondensator ausgestattet, der direkt zwischen den beiden Netzanschlüssen L, N angeordnet ist. Der Mittelpunkt der Reihenschaltung der Filterkondensatoren des Netzwerks 4 ist hier direkt mit dem Mittelpunkt MP des Zwischenkreises DCL verbunden. In der hier gezeigten Ausführung ist lediglich ein einzelner Stromsensor CS in den Anschlussleitungen zum Netz 5 vorgesehen, was in den anderen denkbaren Ausführungen aber ebenfalls möglich ist.

Wie wohlbekannt ist, dient der zusätzliche Transistor T5 in der H5-Topologie dazu, den angeschlossenen PV-Generator PV während der Freilaufphasen vom angeschlossenen Netz 5 elektrisch zu trennen. Im Rahmen dieser Erfindung erfüllt er diese Funktion aber nur im Betrieb mit dem ersten, unipolaren Taktverfahren. Im Betrieb mit dem zweiten Taktverfahren bleibt T5 ständig eingeschaltet und ermöglicht damit einen unabhängigen Betrieb der beiden Halbbrücken HB1, HB2 am Zwischenkreis DCL.

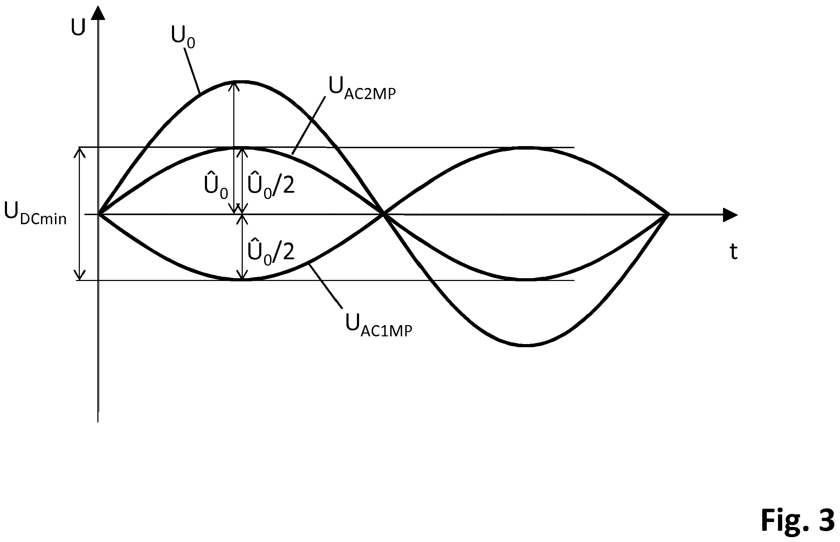

Um die Wirkungsweise der Erfindung näher zu erläutern, wird in Fig. 3 zunächst ein zeitlicher Verlauf von Spannungen gezeigt, wie sie beispielsweise an der H5-Topologie aus Fig. 2 entsteht, wenn diese im ersten Taktverfahren betrieben wird. Die Netzspannung U₀ hat den bekannten sinusförmigen Verlauf mit einer Amplitude Û₀. Im unipolaren Taktverfahren wird während einer Halbwelle der Netzspannung nur eine der beiden Halbbrücken HB1, HB2 getaktet. In Verbindung mit dem potenzialfreien Freilauf, der topologieabhängig durch das Takten weiterer Schalter entsteht, erzeugen die Halbbrücken bezogen auf das Potential des Zwischenkreismittelpunkts MP an den AC-Anschlüssen AC1, AC2, zueinander gegenläufige Sinusverläufe U_{AC1MP}, U_{AC2MP} mit der halben Netzamplitude Û₀/2. Diese beiden Sinusverläufe addieren sich zum Verlauf der Netzspannung U₀. Da der AC-Anschluss AC1 fest mit dem N-Leiter des Netzes 5 verbunden ist, variiert das Potential des Zwischenkreismittelpunktes MP gegenüber Erdpotential, das zur Vereinfachung hier gleich dem Potential des N-Leiters angenommen wird, ebenfalls sinusförmig mit einer Amplitude, die der halben Netzamplitude U₀/2 entspricht. Dies führt zu einem netzfrequenten Anteil eines Ableitstroms über die Ableitkapazität 7, der proportional zur Amplitude der Variation des Generatorpotentials ist. Dieser Anteil addiert sich zu einem aufgrund nicht-idealer Isolation des PV-Generators PV fließenden Fehlerstrom und kann insbesondere bei einem hohen Wert der Ableitkapazität 7 zu einer Auslösung einer Isolationsüberwachung führen, obwohl sich die Anlage noch in einem ausreichend isolierten Zustand befindet. Daher ist es zur Reduzierung des netzfrequenten Anteils des Ableitstroms wünschenswert, die netzfrequente Amplitude der Variation des Generatorpotentials zu reduzieren, um so den entsprechenden netzfrequenten Anteil des Ableitstroms ebenfalls zu reduzieren.

Hier kommt nun das zweite Taktverfahren gemäß dieser Erfindung zum Tragen, das in der Lage ist, diese Amplitude der Variation des Generatorpotentials auf einen geringeren Wert als die halbe Netzamplitude Û₀/2 zu reduzieren. Die Wirkungsweise dieses zweiten Taktverfahrens wird mithilfe der in der Fig. 4 gezeigten Spannungsverläufen dargestellt und erläutert.

Hierzu zeigt Fig. 4 erneut den sinusförmigen Verlauf der Netzspannung U₀ im Vergleich zu den Spannungsverläufen U_{AC1MP}, U_{AC2MP} an den jeweiligen AC-Anschlüssen AC1, AC2 gegenüber dem Potential des Zwischenkreismittelpunkts MP. Die Amplitude Û_{AC1MP} des Spannungsverlaufs am AC-Anschluss AC1 ist hierbei geringer als die Amplitude Û_{AC2MP} des Spannungsverlaufs am AC-Anschluss AC2. Vorteilhafterweise beträgt die Amplitude Û_{AC1MP} höchstens 30% der Netzspannungsamplitude Û₀. Entsprechend beträgt die Amplitude Û_{AC2MP} mindestens 70% der Netzspannungsamplitude Û₀. Da, wie oben bereits beschrieben, der AC-Anschluss AC 1 mit dem Neutralleiter des Netzes 5 verbunden ist, variiert der Spannungsverlauf des Zwischenkreismittelpunkts MP nur mit der kleinere Amplitude Û_{AC1MP} und ist gegenüber der sich aus dem vorstehend beschriebenen ersten Taktverfahren ergebenden Amplitude entsprechend reduziert. Analog reduziert sich auch der netzfrequente Anteil des Ableitstroms durch das zweite Taktverfahren.

Um die asymmetrischen Spannungsverläufen an den AC-Anschlüssen AC1 und AC2 zu erreichen, werden die jeweiligen Halbbrücken HB1, HB2 unabhängig voneinander auf den Spannungsverläufen entsprechende Zielwerte der Brückenspannung geregelt. Alternativ zu einer Spannungsregelung bei der Halbbrücken HB1, HB2 kann auch nur eine Halbbrücke, vorzugsweise die erste Halbbrücke HB1, spannungsgeregelt betrieben werden, während die zweite Halbbrücke stromgeregelt betrieben wird, so dass sich ein erwünschter Netzstrom ergibt. Die Spannungsregelung kann durch eine Bestimmung der Abweichung einer gemessenen Spannung an den jeweiligen AC-Anschlüssen AC1, AC2 von den vorgegebenen Zielwerten und einer der Abweichung entsprechenden Änderung der jeweiligen Tastgrade erfolgen, mit denen die Halbbrücken HB1, HB2 betrieben werden. Es ist aber auch denkbar, eine der beiden Halbbrücken, vorzugsweise die erste Halbbrücke HB1, mit einem vordefinierten Taktmuster zu betreiben, das zumindest näherungsweise zu einem Spannungsverlauf am AC-Anschluss AC1 führt, das die gewünschte Amplitude Û_{AC1MP} aufweist. In diesem Fall ist es nur erforderlich, eine der beiden Halbbrücken geregelt zu betreiben.

Der Betrieb der ersten Halbbrücke HB1 kann unabhängig vom Betrieb der zweiten Halbbrücke HB2 erfolgen, das heißt insbesondere auch mit einer abweichenden Frequenz. In diesem Fall besteht keine zeitliche Korrelation zwischen den Schaltzeitpunkten der Brückenschalter der beiden Halbbrücken. Es ist aber ebenso gut möglich, beide Halbbrücken mit gleicher Taktfrequenz und insbesondere synchron zueinander zu betreiben, zum Beispiel indem die Mittelpunkte der Einschaltperioden der ersten und der zweiten Halbbrücke synchronisiert sind.

Um die asymmetrischen Spannungsverläufe an den AC-Anschlüssen AC 1 und AC 2 bereitzustellen, müssen beide Halbbrücken ständig getaktet werden, das heißt während beider Halbwellen werden abwechselnd beide Schalter der Halbbrücke geschlossen, so dass an dem Brückenausgang dieser Halbbrücke phasenweise sowohl die positiven als auch die negative Spannung der DC-Anschlüsse 2, 3 bereitgestellt wird. Dies ist die Ursache für die vorstehend beschriebenen erhöhten Wandlerverluste während des Betriebs mit dem zweiten Taktverfahren im Vergleich zum Betrieb mit dem ersten Taktverfahren.

Die im zweiten, ableitstromreduzierenden Taktverfahren erforderliche Mindestspannung U_{DCmin}, des Generators wird durch die Amplitude Û_{AC2MP} am zweiten AC-Anschluss AC2 bestimmt und beträgt das Doppelte dieses Wertes. Dieser Wert liegt höher als die erforderliche Mindestspannung U_{DCmin} des Generators, wenn der Wechselrichter 1 mit dem ersten Taktverfahren betrieben wird (U_{DCmin}=Û₀, siehe Fig. 3). Daher ist es vorteilhaft oder sogar erforderlich, die Generatorspannung zu erhöhen, wenn vom ersten in das zweite Taktverfahren gewechselt wird, um ein Unterschreiten dieser Mindestspannung zu vermeiden. Die Anpassung der Generatorspannung kann durch einen dem Wechselrichter vorgeschalteten DC/DC-Wandler BC erfolgen.

### Bezugszeichenliste

- 1: Wechselrichter
- 2,3: DC-Anschluss
- 4: Netzwerk
- 5: Netz
- 6: Verbindung
- 7: Ableitkapazität
- AC1, AC2: AC-Ausgang
- Br1, Br2: Brückenausgang
- T1-T5: Schalter
- HB1, HB2: Halbbrücke
- C1, C2: Controller
- DCL: Zwischenkreis
- BC: DC/DC-Wandler
- PV: PV-Generator
- L1, L2: Filterdrossel
- CS: Stromsensor
- GND: Erdpotential
- N: Neutralleiter
- L: Phasenleiter

## Patentansprüche

1. Verfahren zum Betrieb eines transformatorlosen Wechselrichters (1) mit einer ersten Halbbrücke (HB1) und einer zweiten Halbbrücke (HB2), die parallel zueinander und zu einem Zwischenkreis (DCL) zwischen DC-Anschlüssen (2, 3) des Wechselrichters (1) angeordnet sind und deren Brückenausgang (Br1, Br2) jeweils über eine Filterdrossel (L1, L2) mit einem der entsprechenden Halbbrücke (HB1, HB2) zugeordneten AC-Ausgang (AC1, AC2) des Wechselrichters (1) verbunden ist, wobei der der ersten Halbbrücke (HB1) zugeordnete AC-Ausgang (AC1) mit einem N-Leiter und der der zweiten Halbbrücke (HB2) zugeordnete AC-Ausgang (AC2) mit einer Phase des Netzes (5) verbunden sind, und wobei zwischen den AC-Ausgängen (AC1, AC2) ein niederimpedant mit dem Zwischenkreis (DCL) gekoppeltes Netzwerk (4) von Filterkondensatoren angeordnet ist, umfassend die Schritte:
- Betreiben der beiden Halbbrücken (HB1, HB2) des Wechselrichters (1) mit einem unipolaren Taktverfahren, und
- Bestimmen eines Wertes eines netzfrequenten Ableitstroms an den DC-Anschlüssen (2, 3) des Wechselrichters (1),
wobei bei Überschreiten eines Grenzwertes durch den Ableitstromwert die beiden Halbbrücken (HB1, HB2) des Wechselrichters (1) mit einem ableitstromreduzierenden Taktverfahren betrieben werden, in dem die erste Halbbrücke (HB1) eine Wechselspannung an dem ihr zugeordneten AC-Ausgang (AC1) bereitstellt, wobei eine Amplitude der Wechselspannung weniger als 50% der Amplitude einer Spannungsamplitude des Netzes (5) beträgt und die zweite Halbbrücke (HB2) eine Differenzspannung zwischen der Netzspannung und der von der ersten Halbbrücke (HB1) bereitgestellten Spannung an dem ihr zugeordneten AC-Ausgang (AC2) bereitstellt.

2. Verfahren nach Anspruch 1, wobei die von den Halbbrücken (HB1, HB2) bereitgestellten Wechselspannungen jeweils Sinusspannungen sind.

3. Verfahren nach Anspruch 1 oder 2, wobei die Amplitude der von der ersten Halbbrücke (HB1) bereitgestellten Wechselspannung in Abhängigkeit des Ableitstromwertes gewählt wird, insbesondere die Amplitude mit höherem Ableitstromwert geringer gewählt wird.

4. Verfahren nach einem der vorangehenden Ansprüche, wobei die Amplitude der von der zweiten Halbbrücke (HB2) bereitgestellten Wechselspannung in Abhängigkeit einer an den DC-Anschlüssen (2, 3) anliegenden Spannung gewählt wird.

5. Verfahren nach einem der vorangehenden Ansprüche, wobei bei Überschreiten des Grenzwertes durch den Ableitstromwert weiterhin eine an den DC-Anschlüssen (2, 3) anliegende Gleichspannung durch Ansteuern eines eingangsseitigen DC/DC-Wandlers (BC) erhöht wird.

6. Verfahren nach einem der vorangehenden Ansprüche, wobei bei Überschreiten des Grenzwertes durch den Ableitstromwert eine der Halbbrücken (HB1, HB2) gesteuert betrieben und die andere der Halbbrücken (HB1, HB2) geregelt betrieben wird.

7. Verfahren nach einem der vorangehenden Ansprüche, wobei die erste Halbbrücke (HB1) und die zweite Halbbrücke (HB2) synchron zueinander betrieben werden.

8. Verfahren nach einem der vorangehenden Ansprüche, wobei die erste Halbbrücke (HB1) und die zweite Halbbrücke (HB2) unabhängig voneinander, insbesondere mit unterschiedlichen Taktfrequenzen betrieben werden.

9. Verfahren nach einem der vorangehenden Ansprüche, wobei eine maximale Wechselrichterleistung während des Betriebs mit dem ersten Taktverfahren auf einen höheren Wert begrenzt wird als mit dem zweiten Taktverfahren.

10. Transformatorloser Wechselrichter (1) mit einer ersten Halbbrücke (HB1) und einer zweiten Halbbrücke (HB2), die parallel zueinander und zu einem Zwischenkreis (DCL) zwischen DC-Anschlüssen (2, 3) des Wechselrichters (1) angeordnet sind und deren Brückenausgang (Br1, Br2) jeweils über eine Filterdrossel (L1, L2) mit einem der entsprechenden Halbbrücke (HB1, HB2) zugeordneten AC-Ausgang (AC1, AC2) des Wechselrichters (1) verbunden ist, wobei der der ersten Halbbrücke (HB1) zugeordnete AC-Ausgang (AC1) mit einem N-Leiter und der der zweiten Halbbrücke (HB2) zugeordnete AC-Ausgang (AC2) mit einer Phase des Netzes (5) verbunden sind, und wobei zwischen den AC-Ausgängen (AC1, AC2) ein niederimpedant mit dem Zwischenkreis (DCL) gekoppeltes Netzwerk (4) von Filterkondensatoren angeordnet ist, eingerichtet zum Betrieb mit einem Verfahren nach einem der vorangehenden Ansprüche.

11. Wechselrichter (1) nach Anspruch 10, wobei das Netzwerk (4) eine Serienschaltung von zwei Filterkondensatoren umfasst, deren Mittelpunkt mit einem der DC-Anschlüsse (2, 3) oder mit einem Mittelpunkt eines als geteilter Zwischenkreis gestalteten Zwischenkreises (DCL) verbunden ist.

12. Wechselrichter (1) nach Anspruch 10 oder 11, wobei die Filterdrosseln (L1, L2) der AC-Ausgänge (AC1, AC2) nicht magnetisch gekoppelt sind.

13. Wechselrichter (1) nach einem der Ansprüche 10 bis 12, aufweisend eine der Brückentopologien H4, H5, H6, H6Q und HERIC.

14. Wechselrichter (1) nach einem der Ansprüche 10 bis 13, wobei nur ein Stromsensor (CS) zur Bestimmung des AC-Ausgangsstroms vorgesehen ist, der insbesondere an dem der zweiten Halbbrücke (HB2) zugeordneten AC-Ausgang (AC1, AC2) angeordnet ist.

15. Wechselrichter (1) nach einem der Ansprüche 10 bis 14, weiterhin aufweisend einen DC/DC-Wandler (BC), insbesondere einen Hochsetzsteller, dessen Ausgang mit den DC-Anschlüssen (2, 3) verbunden ist.

## Claims

1. Method for operating a transformerless inverter (1) having a first half-bridge (HB1) and a second half-bridge (HB2) arranged parallel to one another and to an intermediate circuit (DCL) between DC connections (2, 3) of the inverter (1) and whose bridge output (Br1, Br2) is connected in each case via a filter choke (L1, L2) to an AC output (AC1) assigned to the corresponding half-bridge (HB1, HB2), AC2) of the inverter (1), wherein the AC output (AC1) assigned to the first half bridge (HB1) is connected to an N conductor and the AC output (AC2) assigned to the second half bridge (HB2) is connected to a phase of the network (5), and wherein a network (4) of filter capacitors coupled with low impedance to the DC link (DCL) is arranged between the AC outputs (AC1, AC2), comprising the steps:
- operating the two half bridges (HB1, HB2) of the inverter (1) with a unipolar clock method, and
- determining a value of a mains frequency leakage current at the DC terminals (2, 3) of the inverter (1),
wherein when the leakage current value exceeded a limit value, the two half bridges (HB1, HB2) of the inverter (1) are operated with a leakage current-reducing clock method, in which the first half bridge (HB1) provides an AC voltage at the AC output (AC1) assigned to it, wherein an amplitude of the alternating voltage is less than 50% of the amplitude of a voltage amplitude of the network (5), and the second half bridge (HB2) provides a differential voltage between the network voltage and the voltage provided by the first half bridge (HB1) at the AC output (AC2) associated therewith.

2. Method according to claim 1, wherein the alternating voltages provided by the half-bridges (HB1, HB2) are in each case sinusoidal voltages.

3. Method according to claim 1 or 2, wherein the amplitude of the alternating voltage provided by the first half-bridge (HB1) is selected as a function of the leakage current value, in particular the amplitude with a higher leakage current value is selected lower.

4. Method according to one of the preceding claims, wherein the amplitude of the alternating voltage provided by the second half bridge (HB2) is selected as a function of a voltage present at the DC terminals (2, 3).

5. Method according to one of the preceding claims, wherein when the leakage current value exceeded a limit value, a DC voltage present at the DC terminals (2, 3) is further increased by actuating an input-side DC/DC converter (BC).

6. Method according to one of the preceding claims, in which, when the leakage current value exceeded a limit value, one of the half-bridges (HB1, HB2) is operated in a preset manner and the other of the half-bridges (HB1, HB2) is operated in a controlled manner.

7. Method according to one of the preceding claims, wherein the first half bridge (HB1) and the second half bridge (HB2) are operated synchronously with each other.

8. Method according to one of the preceding claims, wherein the first half bridge (HB1) and the second half bridge (HB2) are operated independently of one another, in particular at different clock frequencies.

9. Method according to one of the preceding claims, wherein a maximum inverter power is limited to a higher value during operation with the first clock method than with the second clock method.

10. Transformerless inverter (1) having a first half-bridge (HB1) and a second half-bridge (HB2) which are arranged parallel to one another and to an intermediate circuit (DCL) between DC connections (2, 3) of the inverter (1) and whose bridge output (Br1, Br2) is connected in each case via a filter choke (L1, L2) to an AC output (AC1, AC2) of the inverter (1) assigned to the corresponding half-bridge (HB1, HB2), the AC output (AC1) assigned to the first half bridge (HB1) being connected to an N conductor and the AC output (AC2) assigned to the second half bridge (HB2) being connected to a phase of the network (5), and a low impedance network (4) of filter capacitors coupled to the intermediate circuit (DCL) being arranged between the AC outputs (AC1, AC2), the network being configured to operate with a method according to one of the preceding claims.

11. Inverter (1) according to Claim 10, the network (4) comprising a series circuit of two filter capacitors, the center point of which is connected to one of the DC terminals (2, 3) or to a center point of an intermediate circuit (DCL) designed as a split intermediate circuit.

12. Inverter (1) according to claim 10 or 11, wherein the filter chokes (L1, L2) of the AC outputs (AC1, AC2) are not magnetically coupled.

13. Inverter (1) according to any of claims 10 to 12 comprising any one of bridge topologies H4, H5, H6, H6Q and HERIC.

14. Inverter (1) according to one of the claims 10 to 13, wherein only one current sensor (CS) is provided for determining the AC output current, which is arranged in particular at the AC output (AC1, AC2) assigned to the second half bridge (HB2).

15. Inverter (1) according to one of claims 10 to 14, further comprising a DC/DC converter (BC), in particular a step-up converter, the output of which is connected to the DC connections (2, 3).

## Revendications

1. Procédé de fonctionnement d'un onduleur sans transformateur (1) comportant un premier demi-pont (HB1) et un deuxième demi-pont (HB2) disposés parallèlement l'un à l'autre et à un circuit intermédiaire (DCL) entre des connexions CC (2, 3) de l'onduleur (1) et dont la sortie en pont (Br1, Br2) est reliée respectivement par une self (L1, L2) à une sortie CA (AC1, AC2) de l'onduleur (1) associée à la demi-pont correspondante (HB1, HB2), dans lequel la sortie CA (AC1) associée au premier demi-pont (HB1) est connectée à un conducteur N et la sortie CA (AC2) associée au deuxième demi-pont (HB2) est connectée à une phase du réseau (5), et dans lequel un circuit (4) de condensateurs de filtre couplé au circuit intermédiaire (DCL) à faible impédance est disposé entre les sorties CA (AC1, AC2) comprenant les étapes:
- exploiter les deux demi-ponts (HB1, HB2) de l'onduleur (1) avec une méthode d'horloge unipolaire, et
- déterminer une valeur d'un courant de fuite de fréquence réseau aux bornes CC (2, 3) de l'onduleur (1),
les deux demi-ponts (HB1, HB2) de l'onduleur (1) étant exploité selon un méthode d'horloge à réduction de courant de fuite dans lequel le premier demi-pont (HB1) fournit une tension alternative à la sortie CA (AC1) associée à celui-ci, dans laquelle une amplitude de la tension alternative est inférieure à 50 % de l'amplitude d'une amplitude de tension du réseau (5), et le deuxième demi-pont (HB2) fournit une tension différentielle entre la tension du réseau et la tension fournie par le premier demi-pont (HB1) à la sortie CA (AC2) associée à celui-ci lorsqu'une valeur limite est dépassée par la valeur du courant de fuite.

2. Procédé selon la revendication 1, dans lequel les tensions alternatives fournies par les demi-ponts (HB1, HB2) sont respectivement des tensions sinusoïdales.

3. Procédé selon la revendication 1 ou 2, dans lequel l'amplitude de la tension alternative fournie par le premier demi-pont (HB1) est choisie en fonction de la valeur du courant de fuite, en particulier l'amplitude est choisie plus faible avec une valeur de courant de fuite supérieure.

4. Procédé selon l'une quelconque des revendications précédentes, dans lequel l'amplitude de la tension alternative fournie par le deuxième demi-pont (HB2) est choisie en fonction d'une tension présente aux bornes CC (2, 3).

5. Procédé selon l'une quelconque des revendications précédentes, dans lequel, lorsque la valeur limite est dépassée par la valeur du courant de fuite, une tension continue présente aux bornes CC (2, 3) est encore augmentée en actionnant un convertisseur CC/CC côté entrée (BC).

6. Procédé selon l'une quelconque des revendications précédentes, dans lequel, lorsque la valeur limite est dépassée par la valeur du courant de fuite, un des demi-ponts (HB1, HB2) est exploité de manière commandée et l'autre des demi-ponts (HB1, HB2) est exploité de manière reglée.

7. Procédé selon l'une quelconque des revendications précédentes, dans lequel le premier demi-pont (HB1) et le deuxième demi-pont (HB2) sont exploités en synchronisme l'un avec l'autre.

8. Procédé selon l'une quelconque des revendications précédentes, dans lequel le premier demi-pont (HB1) et le deuxième demi-pont (HB2) sont exploité indépendamment l'un de l'autre, en particulier à différentes fréquences d'horloge.

9. Procédé selon l'une quelconque des revendications précédentes, dans lequel une puissance maximale de l'onduleur est limitée à une valeur supérieure pendant l'exploitation avec la première méthode d'horloge qu'avec la deuxième méthode d'horloge.

10. Onduleur sans transformateur (1) comportant un premier demi-pont (HB1) et un deuxième demi-pont (HB2) disposés parallèlement l'un à l'autre et à un circuit intermédiaire (DCL) entre des connexions CC (2, 3) de l'onduleur (1) et dont la sortie pont (Br1, Br2) est reliée respectivement par une self (L1, L2) à une sortie CA (AC1, AC2) de l'onduleur (1) associée à la demi-pont correspondante (HB1, HB2), la sortie CA (AC1) associée au premier demi-pont (HB1) étant connectée à un conducteur N et la sortie CA (AC2) associée au deuxième demi-pont (HB2) étant connectée à une phase du réseau (5), et un circuit (4) de condensateurs de filtre couplé au circuit intermédiaire (DCL) à faible impédance étant disposé entre les sorties CA (AC1, AC2), l'onduleur étant configuré pour fonctionner avec un procédé selon une quelconque des revendications précédentes.

11. Onduleur (1) selon la revendication 10, le circuit (4) comprenant un connexion en série de deux condensateurs de filtrage dont le point central est connecté à l'une des bornes CC (2, 3) ou à un point central d'un circuit intermédiaire (DCL) conçu comme circuit intermédiaire divisé.

12. Onduleur (1) selon la revendication 10 ou 11, les selfs de filtrage (L1, L2) des sorties CA (AC1, AC2) n'étant pas couplées magnétiquement.

13. Onduleur (1) selon l'une quelconque des revendications 10 à 12 comprenant l'une quelconque des topologies de pont H4, H5, H6, H6Q et HERIC.

14. Onduleur (1) selon l'une quelconque des revendications 10 à 13, un seul capteur de courant (CS) étant prévu pour déterminer le courant alternatif de sortie, qui est disposé en particulier à la sortie CA (AC1, AC2) associée au deuxième demi-pont (HB2).

15. Onduleur (1) selon l'une quelconque des revendications 10 à 14, comprenant en outre un convertisseur CC/CC (BC), en particulier un convertisseur élévateur, dont la sortie est reliée aux connexions CC (2, 3).
